# EUROPÄISCHE PATENTSCHRIFT

(11) **EP 1 211 015 B1**
(45) Veröffentlichungstag und Bekanntmachung des Hinweises auf die Patenterteilung: **12.05.2004**
(21) Anmeldenummer: 01126063.5
(22) Anmeldetag: 01.11.2001
(51) Int. Cl.: B23K 26/42

(54) **Verschleisskontroll-Einrichtung für Schneiddüsen von Laserschneidmaschinen**
Wear control device for a cutting tip of a laser cutting apparatus
Dispositif pour contrôler l'usure d'une buse de coupe d'une machine de découpe au laser

(30) Priorität: 04.11.2000 DE 10054756
(43) Veröffentlichungstag der Anmeldung: 05.06.2002
(73) Patentinhaber: Messer Cutting & Welding GmbH, 64823 Gross-Umstadt (DE)
(72) Erfinder: Faust, Josef, 64711 Erbach (DE)
(74) Vertreter: Staudt, Armin, Dipl.-Ing.

(56) Entgegenhaltungen:
- DE-A- 3 710 816
- US-A- 5 717 187
- US-A- 5 756 960
- US-A- 5 844 196
- PATENT ABSTRACTS OF JAPAN vol. 012, no. 274 (M-725), 29. Juli 1988 (1988-07-29) & JP 63 056379 A (AMADA CO LTD), 10. März 1988 (1988-03-10)
- PATENT ABSTRACTS OF JAPAN vol. 015, no. 294 (M-1140), 25. Juli 1991 (1991-07-25) & JP 03 106586 A (FANUC LTD), 7. Mai 1991 (1991-05-07)
- PATENT ABSTRACTS OF JAPAN vol. 2000, no. 01, 31. Januar 2000 (2000-01-31) & JP 11 285880 A (NIPPON STEEL CORP), 19. Oktober 1999 (1999-10-19)

## Beschreibung

Die Erfindung betrifft eine Verschleißkontroll-Einrichtung für Schneiddüsen von Laserschneidmaschinen mit mindestens einem in X-Achse verfahrbaren Radkasten und einem in einer senkrecht zur X-Achse stehenden Y-Achse verfahrenden Querwagen, der einen mit mindestens einer Schneiddüse ausgerüsteten Schneidkopf aufweist, wobei eine unter die Schneiddüse des Schneidkopfes positionierbare Kameraeinheit vorgesehen ist.

Die zum abstandsgeregelten Laserschneiden von Baustahl, Edelstahl, Aluminium und anderen Werkstücken in Laserschneidmaschinen eingesetzten, u. a. mit einer kapazitiven Abstandssensorik zur kontinuierlichen Erfassung des Abstandes zwischen der Schneiddüse und dem zu schneidenden Werkstück ausgerüsteten Schneiddüsen müssen in unterschiedlichen, von der jeweils zu schneidenden Materialstärke abhängigen Zeitabständen einer optischen Verschleißkontrolle hinsichtlich ihres Verschleisses unterzogen werden. Dazu muss jede Schneiddüse aus dem vom Schneidtisch verfahrenen Schneidkopf ausgebaut werden. Derartige, Verschleißkontrollen von Schneiddüsen in Laserschneidmaschinen verursachen längere Stillstandszeiten und somit eine Verringerung der Schneidleistung. Zudem kann bei der bisherigen Schneiddüsen-Kontrolltechnik nicht ausgeschlossen werden, dass aufgrund eines bereits erfolgten Verschleisses der Schneiddüse der Laserschnitt während des Schneidprozesses abreisst bzw. der Lochstechvorgang nicht mehr durchgeführt werden kann, wodurch eine die Schneidleistung zusätzlich verringernde Unterbrechung des Laserschneidens von Werkstücken erfolgt und das noch nicht fertig geschnittene Werkstück häufig nicht mehr verwendbar ist.

In der JP 63 056379, interpretiert durch das Patent Abstract of Japan vol. 012, no. 274 (M-725), ist eine Laserschneideinrichtung mit exakter Positionierung des Laserkopfes beschrieben. Hierzu wird das zu bearbeitende Werkstück mit einem Referenzloch versehen, durch welches hindurch mittels eine unterhalb des Werkstücks angeordneten Kamera die Position des Laserkopfes oberhalb des Loches erfasst wird, so dass ausgehend von der Position des Referenz-Loches die jeweilige Arbeitsposition des Laserkopfes exakt ermittelt werden kann. Eine Verschleißkontroll-Einrichtung ist aus dieser Druckschrift nicht zu entnehmen.

Der Erfindung liegt daher die Aufgabe zugrunde, eine Verschleißkontroll-Einrichtung zur schnellen und zuverlässigen Funktionskontrolle von Schneiddüsen in Schneidkopf-Anordnungen von Laserschneidmaschinen zu schaffen.

Diese Aufgabe wird ausgehend von einer Laserschneidmaschine der eingangs genannten Gattung erfindungsgemäß dadurch gelöst, dass die Kameraeinheit aus einem mit einem oberen Anschlag ausgebildeten Gehäuse, in welchem ein Kameramodul einer elektronischen Kamera und eine Beleuchtung angeordnet sind, besteht, und dass mittels der Kameraeinheit Bildsignale von dem Schneidkopf erzeugt und diese anschließend ausgewertet werden.Die oberhalb der Kameraeinheit positionierte Schneiddüse wird mittels des Schneidkopfes in der Z-Achse soweit verfahren bis die Spitze der Schneiddüse in die Öffnung des oberen Anschlags des Gehäuses der Kameraeinheit eingreift. Von der in Prüfposition in der oberen mittigen Öffnung des Gehäuses der Kameraeinheit angeordneten Schneiddüse werden mittels der Kamera unter Beleuchtung die zur Prüfung erforderlichen Bildsignale erzeugt. Die vorliegenden Bildsignale werden entweder manuell oder mittels einer elektronischen Einrichtung ausgewertet und die zur einwandfreien Funktion der Schneiddüse erforderlichen Maßnahmen, wie beispielsweise ein Schneiddüsenwechsel, veranlasst. Vorteilhafte Weiterbildungen der Erfindung sind den Unteransprüchen zu entnehmen.

In der erfindungsgemäßen Verschleißkontroll-Einrichtung für Schneiddüsen von Laserschneidmaschinen kann als Kameramodul eine handelsübliche, elektronische Minikamera, beispielsweise eine kostengünstige CCD-Kamera, eingesetzt werden. Diese in der Regel aus einem Kamerakopf (Bildaufnehmer, Objektiv und Blendensteuerung) und einem Netz- und Steuerteil bestehende CCD-Kamera kann auf einer teilbaren Platine von etwa 50 x 140 mm in SMD-Technik montiert werden, sodass der Kamerakopf über ein Bandleiterkabel in beliebigem Winkel zu dem Netz- und Steuerteil montiert werden kann.

Zur Beleuchtung der CCD-Kamera (weniger als 5 Lux) werden in der Kameraeinheit vorzugsweise ringförmig angeordnete weiße Leuchstoffdioden eingesetzt.

In einer ersten bevorzugten Ausführungsform der Erfindung wird die an dem in der Y-Achse verfahrbaren Querwagen angeordnete Kameraeinheit mittels einer Schwenkeinrichtung unter die in Arbeitsstellung befindliche Schneiddüse des Schneidkopfes positioniert. Dazu weist die Schwenkeinrichtung einen mit der Kameraeinheit verbundenen Schwenkarm auf, welcher zusammen mit der Kameraeinheit durch einen, vorzugsweise pneumatischen Kolbenzylinder, in die Prüfstellung gebracht wird.

In einer weiteren bevorzugten Ausführungsform der Erfindung ist die erfindungsgemäße Kameraeinheit direkt an einem der beiden in der X-Achse verfahrbaren Radkästen der Laserschneidanlage angeordnet. Zur Verschleißkontrolle wird der Schneidkopf mit der Schneiddüse mittels des Querwagens in der Y-Achse bis in Höhe der Kameraeinheit verfahren.

Die somit oberhalb der Kameraeinheit positionierte Schneiddüse wird mittels des Schneidkopfes in der Z-Achse soweit verfahren bis die Spitze der Schneiddüse in die mittige Öffnung des oberen Anschlags des Gehäuses der Kameraeinheit eingreift. Von der in Prüfposition in der oberen mittigen Öffnung des Gehäuses der Kameraeinheit angeordneten Schneiddüse werden mittels der automatisch eingeschalteten CCD-Kamera bei einer durch die Leuchtdioden erfolgenden Beleuchtung die zur Prüfung erforderlichen Bildsignale an einem an der Laserschneidmaschine zweckmäßig angeordneten Monitor überspielt. Die vorliegenden Bildsignale werden entweder manuell oder mittels einer elektronischen Einrichtung ausgewertet und die zur einwandfreien Funktion der Schneiddüse erforderlichen Maßnahmen, wie beispielsweise ein Schneiddüsenwechsel, veranlasst.

Das das Kameramodul der CCD-Kamera und die Beleuchtung aufnehmende Gehäuse der Kameraeinheit besteht aus einem lichtundurchlässigen Werkstoff, vorzugsweise aus einem lichtundurchlässigen Kunststoff oder einem Metall.

Zur Vermeidung von Beschädigung der Kameraeinheit ist die Unterseite ihres Gehäuses mit einem elastischen Dämpfungsmaterial, vorzugsweise aus Kunststoff, versehen.

Die erfindungsgemäße, kostengünstige Verschleißkontroll-Einrichtung für Schneiddüsen von Laserschneidmaschinen ist ohne großen Mehrkostenaufwand an allen herkömmlichen Laserschneidmaschinen nachrüstbar und gewährleistet eine schnelle und zuverlässige Verschleißkontrolle von Schneiddüsen in Schneidkopf-Anordnung in Laserschneidmaschinen.

Nachfolgend wird die Erfindung anhand eines in der Zeichnung dargestellten bevorzugten Ausführungsbeispiels näher erläutert.

Es zeigen:
Fig. 1 eine schematische Schnittdarstellung einer erfindungsgemäßen Verschleißkontroll-Einrichtung in Schneiddüsen-Anordnung;
Fig. 2 eine schematische Schnittdarstellung der erfindungsgemäßen Verschleißkontroll-Einrichtung in Querwagen-Anordnung in Ruheposition;
Fig. 3 eine schematische Schnittdarstellung der erfindungsgemäßen Verschleißkontroll-Einrichtung in Querwagen-Schneidkopf-Anordnung;
Fig. 4 eine schematische Schnittdarstellung einer Laserschneidmaschine mit einer in Arbeitsstellung positionierten Schneidkopf-Schneiddüsen-Anordnung und einer Verschleißkontroll-Einrichtung-Radkasten-Anordnung (Ruheposition);
Fig. 5 eine schematische Schnittdarstellung der Laserschneidanlage mit einer Schneiddüsen-Schneidkopf-Radkasten-Anordnung.

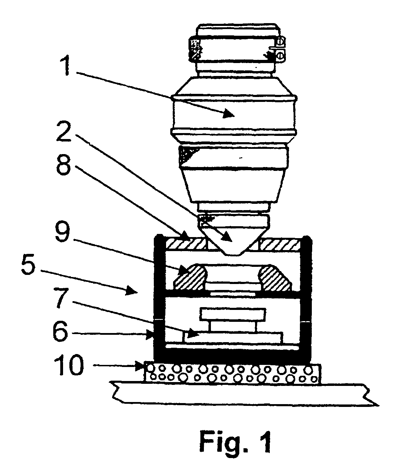

Fig. 1 zeigt in schematischer Schnittdarstellung eine Schneidkopf-Schneiddüsen-Kameraeinheit-Anordnung 1, 2, 5. Die als Verschleißkontroll-Einrichtung für die Schneiddüse 2 eingesetzte Kameraeinheit 5 besteht aus einem Gehäuse 6 mit einem als obere Gehäusewand mit einer mittigen Öffnung ausgebildeten Anschlag 8, einem in dem Gehäuse 6 angeordneten Kameramodul 7 einer elektronischen Kamera und einem in dem Gehäuse 6 oberhalb des Kameramoduls 7 angeordneten Beleuchtung 9. Zur Vermeidung einer Beschädigung der Kameraeinheit 5 ist die Unterseite des Gehäuses 6 mit einem, bevorzugt aus einem Kunststoff bestehenden, elastischen Dämpfungsmaterial 10 versehen.
Zur Verschleißkontrolle der Schneiddüse 2 wird der Schneidkopf 1 mit Schneiddüse 2 in der Z-Achse soweit vertikal verfahren bis die Schneiddüse 2 in die mittige Öffnung des Anschlags 8 des Gehäuses 6 der Kameraeinheit 5 eingreift. Bei nunmehr in Prüfposition in dem oberen Anschlag 8 des Gehäuses 6 der Kameraeinheit 5 angeordneter Schneiddüse 2 schalten sich das Kameramodul 7 der elektronischen Kamera und die Beleuchtung 9 automatisch ein. Das mittels des Kameramoduls 7 von dem Schneidkopf 2 erzeugte Bildsignal wird an einem an der Laserschneidmaschine angeordneten Monitor überspielt. Das in dem Gehäuse 6 angeordnete Kameramodul 7 besteht vorzugsweise aus einer mit einem Halbleiter-Sensor versehenen, kostengünstigen CCD-Kamera, welche auf einer Platine von etwa 40 x 140 mm in SMD-Technik montiert und mittels Bandleiterkabel mit einem Netz- und Steuerteil verbunden ist. Die sich oberhalb des Kameramoduls 7 in dem Gehäuse 6 befindliche Beleuchtung 9 besteht vorzugsweise aus einer ringförmigen Anordnung von weißen Leuchtdioden. Das entsprechend der Größe des Kameramoduls 7 ausgebildete Gehäuse 6 der Kameraeinheit 5 besteht aus einem lichtundurchlässigen Werkstoff, vorzugsweise aus einem lichtundurchlässigen Kunststoff oder aus Metall.

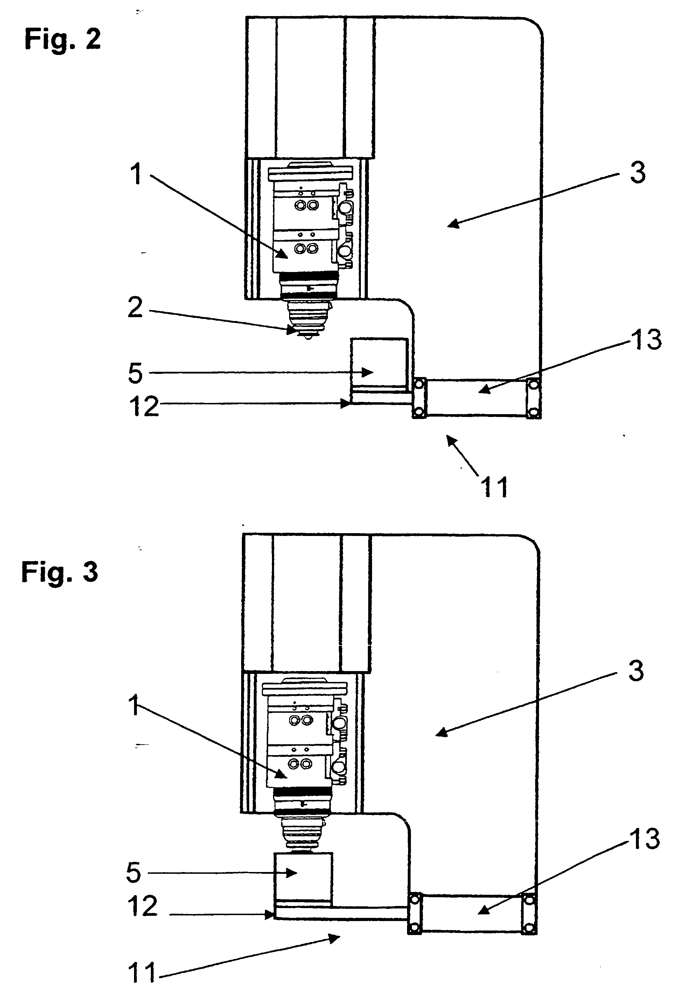

In Fig. 2 ist die an einem den Schneidkopf 1 mit der Schneiddüse 2 in der Y-Achse verfahrbaren Querwagen 3 mittels einer Schwenkeinrichtung 11 angeordnete Kameraeinheit 5 in Ruhestellung dargestellt. Aus Fig. 3 ist ersichtlich, wie die an dem Querwagen 3 angeordnete Kameraeinheit 5 mittels eines von einem, vorzugsweise pneumatisch betätigten Kolbenzylinder 13 horizontal schwenkbaren Schwenkarms 12 der Schwenkeinrichtung 11 unter den zu kontrollierenden Schneidkopf 1 der Schneiddüse 2 positioniert worden ist.

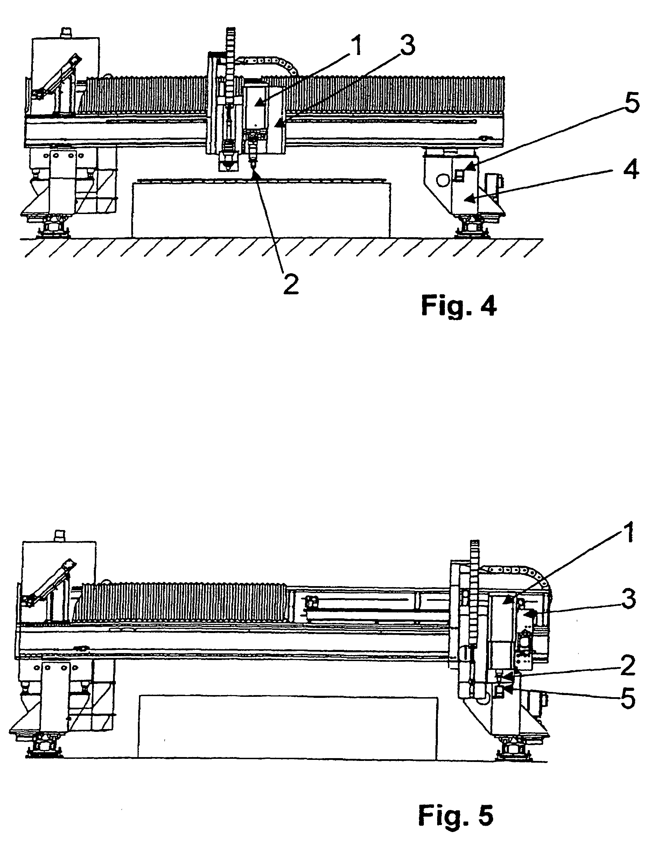

Die Fig. 4 und 5 zeigen die direkt an einem Radkasten 4 der Laserschneidanlage angeordnete Kameraeinheit 5 in Ruhe- bzw. Prüfposition. Die in Fig. 5 dargestellte Prüfposition von Kameraeinheit 5 und Scheiddüse 2 wird dadurch erreicht, dass der Schneidkopf 1 mit Schneiddüse 2 mittels des Querwagens 3 in der Y-Achse bis in Höhe der an dem Radkasten 4 der Laserschneidmaschine angeordneten Kameraeinheit 5 verfahren und die Schneidüse 2 mittels des Schneidkopfes 1 vertikal soweit verfahren wird bis die Schneiddüse 2 in die mittige Öffnung des Anschlags 8 von dem Gehäuse 6 eingreift.

### Bezugszeichenaufstellung

- 1: Schneidkopf
- 2: Schneiddüse
- 3: Querwagen (Y-Achse)
- 4: Radkasten (X-Achse)
- 5: Kameraeinheit
- 6: Gehäuse
- 7: Kameramodul
- 8: Anschlag
- 9: Beleuchtung
- 10: Dämpfungsmaterial
- 11: Schwenkeinrichtung
- 12: Schwenkarm
- 13: Kolbenzylinder (Druckluft)

## Patentansprüche

1. Verschleißkontroll-Einrichtung für Schneiddüsen von Laserschneidmaschinen mit mindestens einem in X-Achse verfahrbaren Radkasten (4) und einem in einer senkrecht zur X-Achse stehenden Y-Achse verfahrenden Querwagen (3), der einen mit mindestens einer Schneiddüse (2) ausgerüsteten Schneidkopf (1) aufweist, wobei eine unter die Schneiddüse (2) des Schneidkopfes (1) positionierbare Kameraeinheit (5) vorgesehen ist, **dadurch gekennzeichnet, dass** die Kameraeinheit (5) aus einem mit einem oberen Anschlag (8) ausgebildeten Gehäuse (6) in welchem ein Kameramodul (7) einer elektronischen Kamera und eine Beleuchtung (9) angeordnet sind, besteht, und dass mittels der Kameraeinheit (5) Bildsignale von dem Schneidkopf erzeugt und diese anschließend ausgewertet werden.

2. Laserschneidmaschine mit mindestens einen in X-achse verfahrbaren Radkasten (4) und einem in einer senkrecht zur X-Achse stehenden Y-Achse verfahrenden Querwagen (3) mit einer Verschleißkontroll-Einrichtung nach Anspruch 1, **dadurch gekennzeichnet, dass** die Kameraeinheit (5) mittels einer Schwenkeinrichtung (11) an dem Querwagen (3) der Laserschneidmaschine angeordnet ist.

3. Laserschneidmaschine mit mindestens einen in X-achse verfahrbaren Radkasten (4) und einem in einer senkrecht zur X-Achse stehenden Y-Achse verfahrenden Querwagen (3) mit einer Verschleißkontroll-Einrichtung nach Anspruch 1, **dadurch gekennzeichnet, dass** die Kameraeinheit (5) an einem Radkasten (4) der Laserschneidmaschine angeordnet ist.

4. Verschleißkontroll-Einrichtung nach Anspruch 1, , **dadurch gekennzeichnet, dass** das vorzugsweise im Bodenbereich des Gehäuses (6) angeordnete Kameramodul (7) Bestandteil einer CCD-Kamera ist.

5. Verschleißkontroll-Einrichtung nach Anspruch 1, , **dadurch gekennzeichnet, dass** die in dem Gehäuse (6) oberhalb der Kamera (7) angeordnete Beleuchtung (9) aus einer bevorzugt ringförmigen Anordnung von weißen Leuchtdioden besteht.

6. Verschleißkontroll-Einrichtung nach Anspruch 1, , **dadurch gekennzeichnet, dass** der die obere Wand des Gehäuses (6) bildende Anschlag (8) eine, die Schneiddüse (2) des Schneidkopfes (1) zumindest teilweise aufnehmende, mittige Öffnung aufweist.

7. Verschleißkontroll-Einrichtung nach Anspruch 1, , **dadurch gekennzeichnet, dass** die Unterseite des Gehäuses (6) der Kameraeinheit (5) mit einem, vorzugsweise aus Kunststoff bestehenden, elastischen Dämpfungsmaterial (7) versehen ist.

## Claims

1. A wear control device for cutting tips of laser cutting apparatus, comprising at least one wheel box (4) movable in an X-direction and a transverse carriage (3) which is movable in a Y-axis perpendicular to said X-axis and comprises a cutting head (1) equipped with at least one cutting tip (2), with a camera unit (5) that can be positioned below the cutting tip (2) of said cutting head (1), **characterized in that** said camera unit (5) consists of a housing (6) which is formed with an upper stop (8) and in which a camera module (7) of an electronic camera and a lighting means (9) are arranged, and that image signals of said cutting head are produced by means of said camera unit (5) and are then evaluated.

2. A laser cutting apparatus comprising at least one wheel box (4) movable in an X-axis and a transverse carriage (3) movable in a Y-axis perpendicular to said X-axis, comprising a wear control device according to claim 1, **characterized in that** said camera unit (5) is arranged with the help of a pivot means (11) on said transverse carriage (3) of said laser cutting apparatus.

3. A laser cutting apparatus comprising at least one wheel box (4) movable in an X-axis and a transverse carriage (3) movable in a Y-axis perpendicular to said X-axis, comprising a wear control device according to claim 1, **characterized in that** said camera unit (5) is arranged on a wheel box (4) of said laser cutting apparatus.

4. A wear control device according to claim 1, **characterized in that** said camera module (7) which is preferably arranged in the bottom area of said housing (6) is part of a CCD camera.

5. The wear control device according to claim 1, **characterized in that** the lighting means (9) which is arranged in said housing (6) above said camera (7) consists of a preferably annular arrangement of white light-emitting diodes.

6. The wear control device according to claim 1, **characterized in that** the stop (8) forming the upper wall of said housing (6) comprises a central opening which accommodates said cutting tip (2) of said cutting head (1) at least in part.

7. The wear control device according to claim 1, **characterized in that** the bottom side of said housing (6) of said camera unit (5) is provided with an elastic damping material (7), which preferably consists of plastics.

## Revendications

1. Dispositif de contrôle d'usure pour buses de coupe de machine à découper au laser avec au moins un carter de roue mobile (4) dans l'axe X et un chariot transversal (3) mobile dans un axe Y perpendiculaire à l'axe X, qui présente une tête de coupe (1) munie d'au moins une buse de coupe (2), une unité de caméra (5) positionnable sous la buse de coupe (2) de la tête de coupe (1) étant prévue, **caractérisée en ce que** l'unité de caméra (5) se compose d'un boîtier (6) réalisé avec une butée supérieure (8) dans lequel sont disposés un module de caméra (7) d'une caméra électronique et un éclairage (9) et **en ce qu'**au moyen de l'unité de caméra (5) des signaux d'image sont générés par la tête de coupe et sont ensuite analysés.

2. Machine à découper au laser avec au moins un carter de roue (4) mobile dans l'axe X et un chariot transversal (3) mobile dans un axe Y perpendiculaire à l'axe X, avec un dispositif de contrôle d'usure selon la revendication 1, **caractérisée en ce que** l'unité de caméra (5) est disposée au moyen d'un dispositif de bascule (11) sur le chariot transversal (3) de la machine à découper au laser.

3. Machine à découper au laser avec au moins un carter de roue mobile (4) dans l'axe X et un chariot transversal (3) mobile dans un axe Y perpendiculaire à l'axe X, avec un dispositif de contrôle d'usure selon la revendication 1, **caractérisée en ce que** l'unité de caméra (5) est disposée sur un carter de roue (4) de la machine à découper.

4. Dispositif de contrôle d'usure selon la revendication 1, **caractérisé en ce que** le module de caméra (7) disposé de préférence dans la zone de fond du boîtier (6) fait partie d'une caméra CCD.

5. Dispositif de contrôle d'usure selon la revendication 1, **caractérisé en ce que** l'éclairage (9) disposé dans le boîtier (6) au-dessus de la caméra (7) se compose d'une disposition de préférence annulaire de diodes lumineuses blanches.

6. Dispositif de contrôle d'usure selon la revendication 1, **caractérisé en ce que** la butée (8) formant la paroi supérieure du boîtier (6) présente une ouverture médiane logeant au moins partiellement la buse de coupe (2) de la tête de coupe (1).

7. Dispositif de contrôle d'usure selon la revendication 1, **caractérisé en ce que** la face inférieure du boîtier (6) de l'unité de caméra (5) est munie d'un matériaux d'amortissement élastique (7) de préférence en matière plastique.
